# EUROPÄISCHE PATENTSCHRIFT

(11) **EP 0 756 815 B1**
(45) Veröffentlichungstag und Bekanntmachung des Hinweises auf die Patenterteilung: **06.12.2000**
(21) Anmeldenummer: 96111970.8
(22) Anmeldetag: 25.07.1996
(51) Int. Cl.: A01D 80/02

(54) **Heuwerbungsmaschine**
Haymaking machine
Machine de fenaison

(30) Priorität: 01.08.1995 DE 29512347 U
(43) Veröffentlichungstag der Anmeldung: 05.02.1997
(73) Patentinhaber: NIEMEYER Landmaschinen GmbH, 48477 Hörstel-Riesenbeck (DE)
(72) Erfinder: Ungruh, Josef, 48429 Rheine (DE)
(74) Vertreter: Busse & Busse Patentanwälte

(56) Entgegenhaltungen:
- EP-A- 0 174 569
- CH-A- 479 997
- DE-A- 1 482 175
- DE-A- 3 107 162
- DE-A- 3 123 020
- DE-U- 8 902 942
- DE-U- 9 002 080

## Beschreibung

Die Erfindung betrifft eine Heuwerbungsmaschine, insbesondere einen Kreiselschwader in einer Ausbildung gemäß dem Oberbegriff des Anspruchs 1.

Bei einer bekannten Heuwerbungsmaschine dieser Art (DE-A-31 07 162) sind die Federwindungen der Schenkelfedern im gleichen Drehsinn gewickelt, damit bei Richtungsumkehr des Kreiselrechens ein Umstecken bzw. Verschwenken der Doppelfederzinken entfallen kann. Zugleich haben die Schenkelfedern im Verkröpfungsbereich eine den Abstand zwischen den Schenkelfedern der ersten und der zweiten Reihe verringernde Ausrichtung, so daß die Schenkelfedern beider Reihen nahezu in einer Ebene liegen.

Bei einer anderen bekannten Heuwerbungsmaschine (DE-U-90 02 080) sind die radial ausgerichteten Zinkenträger an ihren Enden mit mehreren Doppelfederzinken besetzt, die einen Zinkenkamm bilden. Damit die innen am Zinkenträger positionierten Zinken Bodenkonturen schonender folgen können, haben einige wenige innere Zinken des Zinkenkammes eine dadurch abgeänderte Form, daß sie unterhalb ihres Federspeichers kürzer und unterschiedlich entgegen der Arbeitsrichtung zum Erdboden abgebogen sind. Diese in der Form veränderten inneren Zinken schirmen den Arbeitsbereich des Zinkenkammes nach hinten ab, so daß auch bei hoher Fahrgeschwindigkeit keine Erntegutverluste entstehen.

Bei einer ferner bekannten Heuwerbungsmaschine (DE-A-31 23 020) sind Doppelfederzinken an den Enden von Zinkenträgern befestigt, deren Wickelachse tangential zu ihrem Drehkreis ausgerichtet ist und deren beiden Zinkenenden höhenversetzt enden.

Schließlich ist ein Federzinken für Heuerntemaschinen bekannt (DE-U-89 02 942), bei dem die Federschenkel Knickungen und Vergabelungen aufweisen. Dabei kann eine Teilvergabelung und ein Zusatzzinkenteil scherenförmig gespreizt sein und bezogen auf die Drehrichtung einen Versatz aufweisen.

Der Erfindung liegt die Aufgabe zugrunde, eine Heuwerbungsmaschine zu schaffen, deren Leistungsfähigkeit und Arbeitsqualität mit einfachen Mitteln verbessert ist. Die Erfindung löst diese Aufgabe durch eine Heuwerbungsmaschine mit den Merkmalen des Anspruchs 1. Hinsichtlich wesentlicher weiterer Ausgestaltungen wird auf die Ansprüche 2 bis 22 verwiesen.

Die Heuwerbungsmaschine nach der Erfindung erhöht mit einfachsten Mitteln die Leistung in hervorragender Weise und verbessert zugleich die Arbeitsqualität. Durch die zweireihige Anordnung der wirksamen Enden der Schenkelfedern mit vergrößertem Abstand kann die Fahrgeschwindigkeit des Traktors bei gleicher Arbeitsqualität erhöht werden. Insbesondere bei kurzem Halmgut erfaßt die zweite Zinkenreihe jenes Halmgut, das die erste Zinkenreihe liegengelassen hat. Dies ist auch bei relativ nassem oder verregnetem Halmgut der Fall, das wenig Volumen hat und deshalb flach auf dem Boden aufliegt.

Nach der Erfindung können die wirksamen Enden der einzelnen Schenkelfedern auf verschiedene Art und Weise zueinander angeordnet sein, je nachdem in welcher Halmgutart bevorzugt gearbeitet werden soll.

Für die Bearbeitung von Heu und Stroh ist es vorteilhaft, wenn die beiden wirksamen Enden der Schenkelfedern eines Doppelfederzinkens in einer Wirkungslinie hintereinander um die Kreiseldrehachse arbeiten. Dazu wird eine Schenkelfeder soweit verkröpft, daß der wirksame Teil im Abstand zur vorlaufenden Schenkelfeder arbeitet. Wahlweise hierzu kann jedoch auch von Vorteil sein, wenn beide Schenkelfedern aufeinander zugehend verkröpft sind.

Vorzugsweise ist die in Drehrichtung vorlaufende Schenkelfeder radial außenliegend angeordnet. Das trifft auch für die vorlaufenden Schenkelfedern der weiteren nebeneinander angeordneten Doppelfederzinken auf jedem Zinkenträger zu.

Eine radial innenliegend angeordnete, vorlaufende Schenkelfeder hat mit ihrer etwa parallel angeordneten zweiten Schenkelfeder für das Halmgut einen besonders starken Fördereffekt nach außen. Die vorlaufende Schenkelfeder ist nach der Erfindung vorzugsweise tangential aus der Wicklung zum Boden hin gerichtet, während die nachlaufende Schenkelfeder etwa parallel dazu ausgerichtet ist und in Drehrichtung einen größeren Abstand hat, damit der Zwischenraum zwischen den beiden Schenkelfedern für beispielsweise langes Material genügend groß ist, und die Stauräume sich gegenseitig nicht behindern.

Bei kurzem Halmgut kann es von Vorteil sein, wenn die zur Bearbeitung des Halmgutes wirksamen Teile der Schenkelfedern eines Doppelfederzinkens unterschiedliche Wirkungslinien um die Kreiselachse durchlaufen. Hier ist die Recharbeit besonders eng, so daß beispielsweise eine Schleierbildung von liegengebliebenem kurzem Halmgut wirksam verhindert wird.

Nach der Erfindung ist es in vorteilhafter Weise möglich, innerhalb der auf jedem Zinkenträger angeordneten Doppelfederzinken in Längsabstand eine Stufung vorzusehen, bei der z. B. abwechselnd ein Doppelfederzinken mit großem Abstand der Schenkelfedern und ein Doppelfederzinken mit nur etwa halb so großem Abstand der Schenkelfedern abwechselnd angeordnet sind. Dies erzeugt eine besonders intensive Recharbeit, da das Halmgut in verschiedenen Ebenen der nachlaufenden Schenkelfedern erfaßt und gefördert wird. Durch die gesteuerten Zinkenträger wird das Halmgut schonend im Schwad freigegeben. Bei dieser Art der Arnordnung der wirksamen Enden der Schenkelfedern können sowohl die zwei Schenkelfedern eines Doppelfederzinkens in einer Wirkungslinie als auch zueinander versetzt in zwei Wirkungslinien arbeiten.

Je mehr Doppelfederzinken auf einem Zinkenträger angeordnet sind, desto intensiver ist grundsätzlich die Recharbeit. Die gemeinsame vertikale Ebene durch die Enden der vorlaufenden Schenkelfedern in Drehrichtung sollten nach der Erfindung im Abstand vor der vertikalen Kreiselachse des Kreiselrechens verlaufen. Dadurch wird die Förderrichtung des Materials nach außen begünstigt. Eine gemeinsame vertikale Ebene durch die Enden der nachlaufenden Schenkelfedern der letzten Reihe sollte die vertikale Kreiselachse des Kreiselrechens schneiden, um zu verhindern, daß eine nach innen gerichtete Komponente für die Förderung des zu bearbeitenden Materials entsteht.

Nach der Erfindung ist es auch in vorteilhafter Weise möglich, daß der Abstand der vorlaufenden Schenkelfederenden zum Boden größer ist als der Abstand der nachlaufenden Schenkelfederenden. Hierdurch wird erreicht, daß die vorlaufenden Schenkelfedern die große Masse des Halmgutes erfassen, während die nachlaufenden wirksamen Schenkelfederenden mehr das kurze Halmgut zusammenrechen.

Der Verkröpfungsbereich der Schenkelfedern ist vorzugsweise im oberen Drittelbereich der Federn angeordnet, damit diese in ihrem wirksamen Teil keine seitliche Verkröpfung haben. Vorteilhaft für die Arbeitsweise des Doppelfederzinkens ist es, wenn die hintere Schenkelfeder im oberen Bereich zur Horizontalen einen Winkel von etwa ∝ = 35 ° verwirklicht.

Es kann auch von Vorteil sein, daß ein Doppelfederzinken aus zwei nicht fest miteinander verbundenen Einzelschenkelfedern besteht, die einzeln oder zusammen mit dem Zinkenträger lösbar verbunden sind. So kann beispielsweise auf einfachste Weise der Anstellwinkel der einzelnen Schenkelfedern verändert werden, wenn dieser nicht parallel sein soll.

Auch eine Winkelverstellung der zusammenhängenden Doppelfederzinken zur vertikalen Ebene kann von Vorteil sein.

Doppelfederzinken mit zwei Schenkelfedern, die zueinander vor- oder nacheilend angeordnet sind, können nach der Erfindung auch vorteilhaft an Heuwerbungsmaschinen zum Zetten mit nicht gesteuerten Zinkenträgern eingesetzt werden. Die Form der Doppelfederzinken wird dann den Gegebenheiten angepaßt. Die auf einfachste Weise Verdoppelung der wirksamen Zinken ist auch hier leistungssteigernd und verbessert die Arbeitsqualität.

Weitere Merkmale und Vorteile der Erfindung ergeben sich aus der nachfolgenden Beschreibung und den Zeichnungen, in denen mehrere Ausführungsbeispiele von Doppelfederzinken für Heuwerbungsmaschinen, insbesondere Kreiselschwader, nach der Erfindung schematisch, angenähert maßstäblich dargestellt sind.

Es zeigt:
- Fig. 1 -: Einen einkreiseligen Kreiselschwader in Arbeitsstellung in einer Seitenansicht.
- Fig. 2 -: Den Kreiselschwader nach Fig. 1 in einer Draufsicht.
- Fig. 3 -: Einen Doppelfederzinken in einer Seitenansicht.
- Fig. 4 -: Eine Draufsicht des Doppelfederzinkens nach Fig. 3.
- Fig. 5 -: Eine Ansicht entgegen der Drehrichtung des Doppelfederzinkens nach Fig. 3
- Fig. 6 -: Ein weiteres Ausführungsbeispiel eines Doppelfederzinkens in einer Seitenansicht.
- Fig. 7 -: Ein weiteres Ausführungsbeispiel eines Doppelfederzinkens in einer Seitenansicht.
- Fig. 8 -: Detail X nach Fig. 2 mit einem Ausführungsbeispiel der Anordnung der Doppelfederzinken.
- Fig. 9 -: Detail X nach Fig. 2 mit einem weiteren Ausführungsbeispiel der Anordnung der Doppelfederzinken.
- Fig. 10 -: Detail X nach Fig. 2 mit einem weiteren Ausführungsbeispiel der Anordnung der Doppelfederzinken.
- Fig. 11 -: Detail X nach Fig. 2 mit einem weiteren Ausführungsbeispiel der Anordnung der Doppelfederzinken.

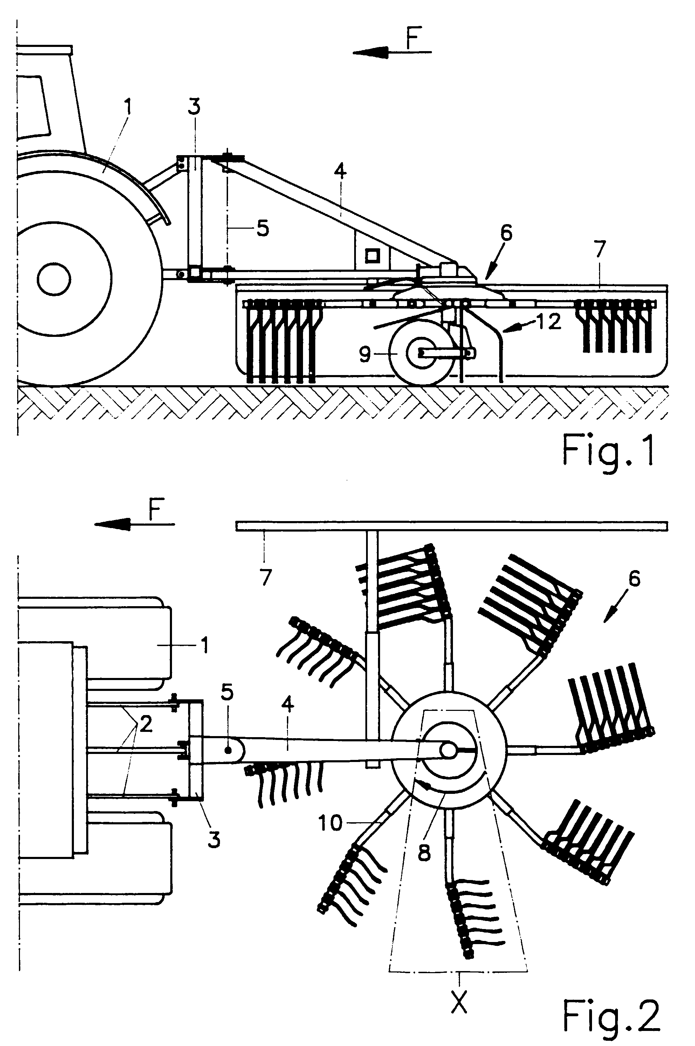

Als Heuwerbungsmaschine nach der Erfindung ist ein einkreiseliger Kreiselschwader mit mehreren gesteuerten Zinkenträgern (10) dargestellt (Fig. 1; 2), die an einem Kreiselrechen (6) angeordnet sind und sich bei der Arbeit in Drehrichtung (8) um die Kreiselachse (11) bewegen. Auf die Darstellung von für die Erfindung unwesentliche Details ist verzichtet worden. Der Kreiselrechen (6) ist mit einem Maschinenrahmen (4) verbunden. Der Maschinenrahmen (4) mit dem Kreiselrechen (6) ist in Arbeitsstellung um eine Hochachse (5) schwenkbeweglich. Den Kreiselschwader verbindet ein Anbaubock (3) mit einem Verbindungsgestänge (2) zum Traktor (1). Der Kreiselschwader wird vom Traktor (1) aus über nicht dargestellte Gelenkwellen angetrieben. Er stützt sich über höhenverstellbare Stützräder (9) auf dem Boden ab. Über diese wird auch die Arbeitshöhe der Doppelfederzinken (12,13,14,15,16) eingestellt.

Das Schwadgut wird von den Doppelfederzinken (12,13,14,15,16) an den gesteuerten Zinkenträgern (10) in Drehrichtung (8) gefördert, wobei die Doppelfederzinken (12,13,14,15,16) auf der in Fahrtrichtung (F) linken Seite in Arbeitsstellung das Schwadgut zusammenrechen und auf der in Fahrtrichtung (F) rechten Seite einen Schwad bilden, dessen Größe durch einen verstellbaren Schwadbegrenzer (7) bestimmt wird. Dabei werden die Doppelfederzinken (12,13,14,15,16) an den Zinkenträgern (10) so gesteuert, daß sie außer Eingriff kommen.

Bei Schwadern ist die Erfindung nicht auf den als Ausführungsbeispiel dargestellten Einkreiselschwader beschränkt. Mehrkreiselige Schwader zum Seiten- oder Mittenschwaden könnten die Vorteile der Erfindung ebenfalls nutzen.

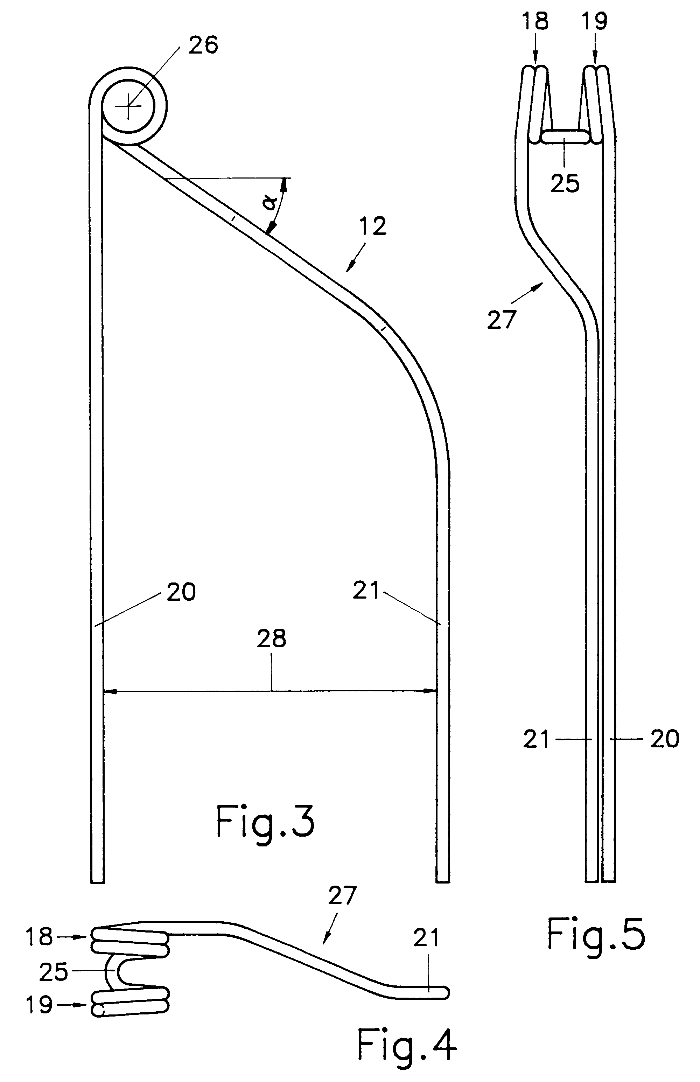

Fig. 3 zeigt ein Ausführungsbeispiel eines Doppelfederzinkens in einer Seitenansicht. Er besteht im wesentlichen aus zwei Schenkelfedern (20,21), die in für das Federungsverhalten wesentlichen Wicklungen (18,19) enden. Die Anzahl der Wicklungen (18,19) richtet sich nach dem geforderten Federungsverhalten der Schenkelfedern (20,21). Die gegenläufig gewickelten Wicklungen (18,19) sind durch eine U-förmige Schlaufe (25) miteinander verbunden, die gleichzeitig zur lösbaren Befestigung des Zinkens am Zinkenträger (10) benutzt wird. Im oberen Bereich verlaufen die Schenkelfedern (21,23) zur Horizontalen vorzugsweise in einem Winkel von etwa ∝ = 35 °.

Der Doppelfederzinken (12) besteht vorzugsweise aus hochwertigem, vergütetem, rundem Federstahl. Die vorlaufende Schenkelfeder (20) ist radial außenliegend angeordnet und tangential aus der Wicklung (19) zum Boden hin gerichtet. Die nachlaufende Schenkelfeder (21) ist mit ihrem wirksamen Teil etwa parallel zur vorlaufenden Schenkelfeder (20) ausgerichtet und in Drehrichtung (8) mit großem Abstand (28) 20 cm bis 30 cm, vorzugsweise 25 cm, hinter dieser angeordnet. Die nachlaufende Schenkelfeder (21) weist nahe ihrer Wicklung (18) im oberen Drittelbereich eine Verkröpfung (27) auf.

Die Wickelachse (26) ist in dem Ausführungsbeispiel etwa parallel zur Längsachse des rohrförmigen Zinkenträgers (10) angeordnet. Nach der Erfindung können jedoch auch andere geometrische Formen von Zinkenträgern verwendet werden.

Fig. 4 stellt den Doppelfederzinken (12) in einer Draufsicht dar. Fig. 5 zeigt den Doppelfederzinken (12) in einer Ansicht entgegen der Drehrichtung (8).

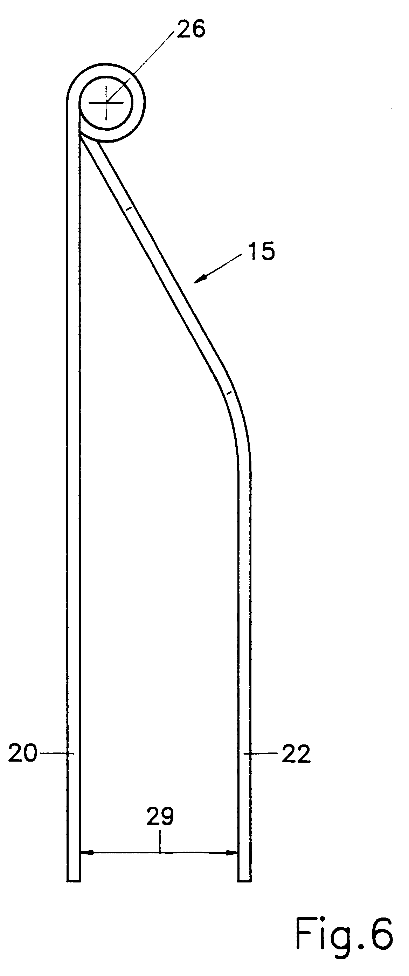

In Fig. 6 ist ein weiteres Ausführungsbeispiel eines Doppelfederzinkens (15) dargestellt. Er unterscheidet sich zu dem Doppelfederzinken (12) dadurch, daß die wirksamen Teile der Schenkelfedern (20,22) in Drehrichtung (8) einen geringeren Abstand (29), etwa 8 cm bis 18 cm, haben.

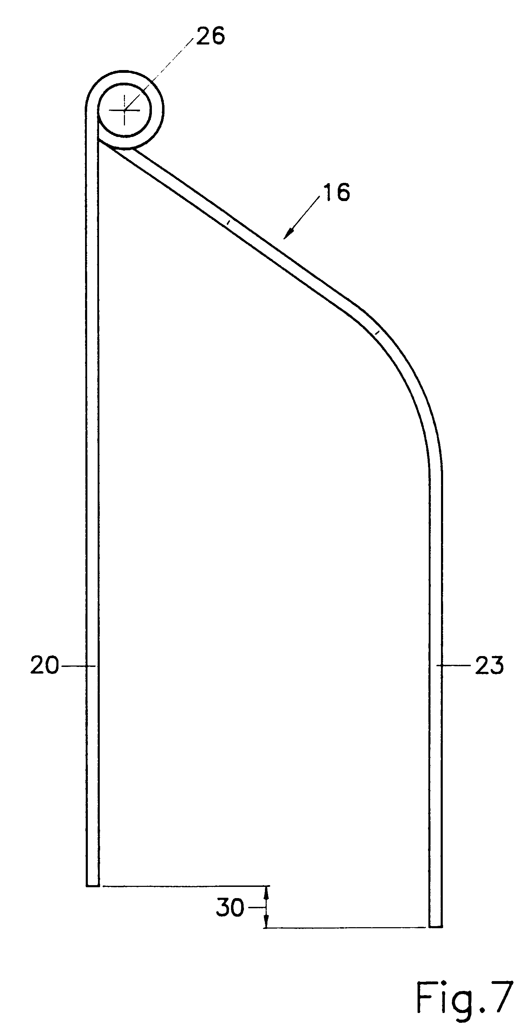

Bei dem Doppelfederzinken (16) in Fig. 7 sind die Enden der Schenkelfedern (20,23) nicht in einer Ebene. Das Ende der Schenkelfeder (23) ist um die Höhe (30) länger. Eine unterschiedliche Höhe (30) kann nach der Erfindung auch bei dem Doppelfederzinken (15) Vorteile bringen.

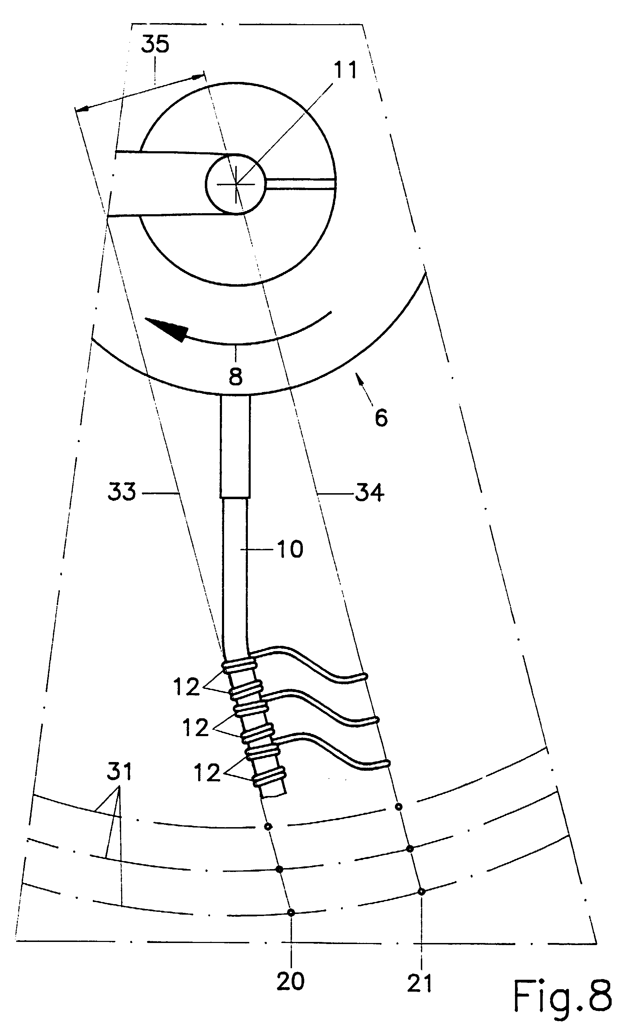

Die vor- und nacheilenden Schenkelfedern (20,21,22,23) können in Drehrichtung (8) auf gleichen Wirkungslinien (31) oder verschiedenen Wirkungslinien (32) arbeiten. Fig. 8 zeigt Detail X aus Fig. 2 in vergrößerter Darstellung. An dem Zinkenträger (10) sind am äußeren Ende nebeneinander sechs Doppelfederzinken (12) lösbar befestigt. Drei innere Doppelfederzinken (12) sind vollständig in einer Draufsicht dargestellt, während von den äußeren drei Doppelfederzinken (12) lediglich die Enden der Schenkelfedern (20,21) auf ihren Wirkungslinien (31) zu sehen sind. Sie arbeiten hier jeweils in einer Wirkungslinie (31). Die gemeinsame vertikale Ebene (33) durch die Enden der vorlaufenden Schenkelfedern (20) sind in Drehrichtung (8) im Abstand (35) vor der vertikalen Kreiselachse (11) angeordnet, während die gemeinsame vertikale Ebene (34) durch die Enden der nachlaufenden Schenkelfedern (21) vorzugsweise durch die vertikale Kreiselachse (11) verläuft.

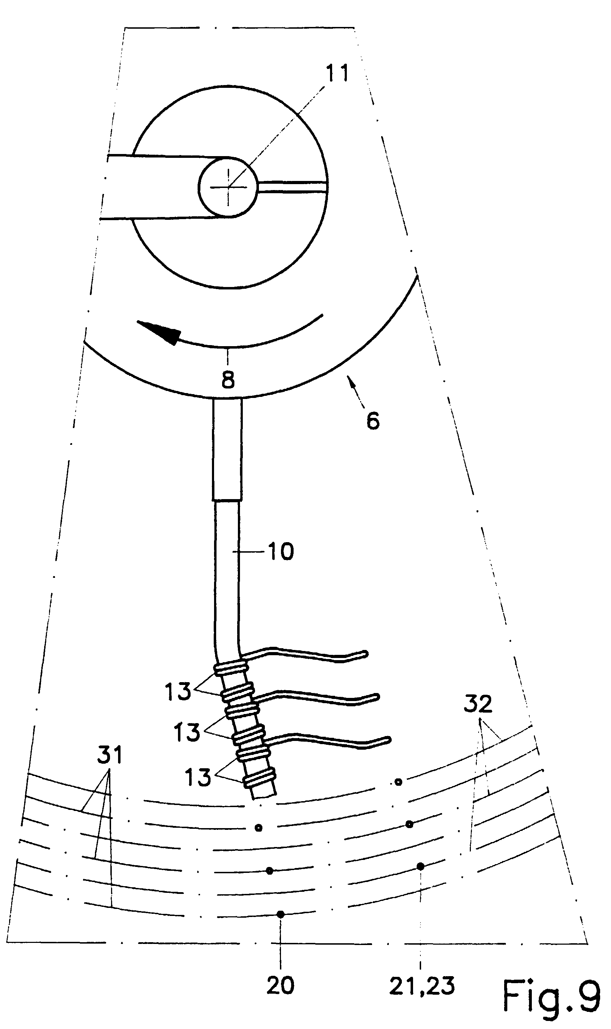

Fig. 9 zeigt im Prinzip ebenfalls das Detail X aus Fig. 2. Der Unterschied zu dem Ausführungsbeispiel aus Fig. 8 ist, daß die nachlaufenden Enden der Schenkelfedern (21) jeweils auf einer eigenen Wirkungslinie (32) arbeiten. Dies wird durch eine entsprechende Verkröpfung (27) erreicht. Der Abstand (28) bleibt erhalten. Diese Anordnung kann für den Doppelfederzinken (13) und den Doppelfederzinken (16) angewendet werden, so daß die vorlaufenden Schenkelfedern (20) und die nachlaufenden Schenkelfederenden (21,23) dargestellt sind.

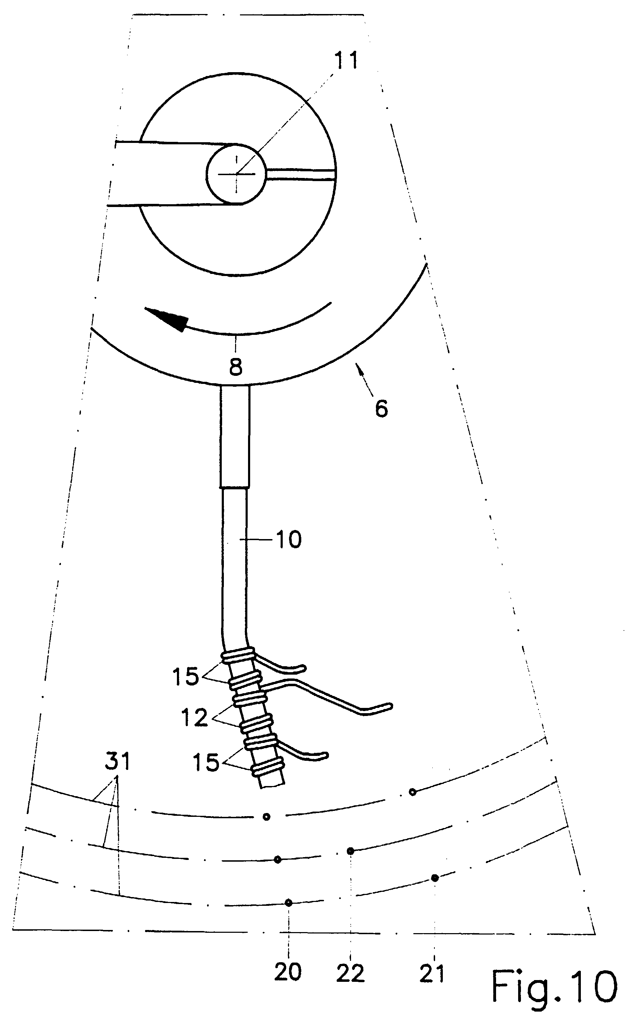

Fig. 10 zeigt Detail X aus Fig. 2 mit einem weiteren Ausführungsbeispiel für die Anordnung der Doppelfederzinken (12,15). Hier sind wechselweise Doppelfederzinken (12) und Doppelfederzinken (15) auf dem Zinkenträger (10) angeordnet. Die wirksamen Enden der Schenkelfedern (20,21;20,22) arbeiten jeweils hintereinander auf den Wirkungslinien (31).

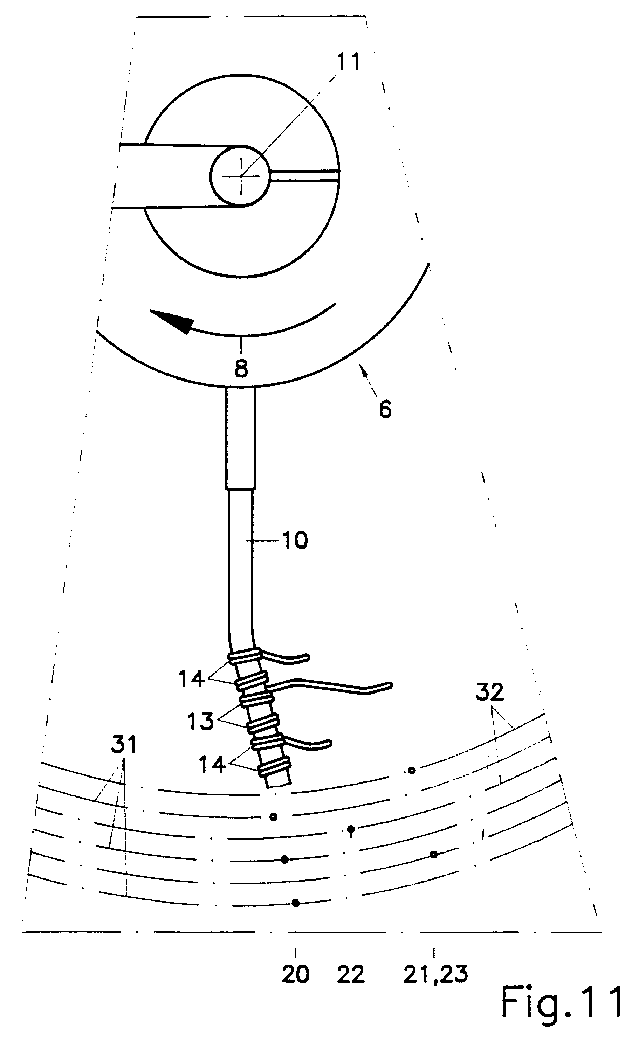

Fig. 11 stellt Detail X nach Fig. 2 mit einem weiteren Ausführungsbeispiel der Anordnung von Doppelfederzinken (13,14) dar. Mit dem Zinkenträger (10) sind wechselweise Doppelfederzinken (13) und Doppelfederzinken (14) nebeneinander angeordnet verbunden. Die Verkröpfung (27) jedes Doppelfederzinkens (13,14) ist so ausgelegt, daß jeweils die nachlaufende Schenkelfeder (21,22,23) auf einer eigenen Wirkungslinie (32) arbeitet, während die vorlaufenden Schenkelfedern (20) auf den Wirkungslinien (31) um die Kreiselachse (11) arbeiten.

Nach der Erfindung sind weitere Anordnungen und Formen von Doppelfederzinken und Schenkelfedern möglich, beispielsweise mit verkröpften vorlaufenden Schenkelfedern (20). Ferner können die Doppelfederzinken (12,13,14,15,16) aus zwei nicht fest miteinander verbundenen Einzelschenkelfedern bestehen, die jeweils mit dem Zinkenträger (10) lösbar verbunden sind. Dabei können die Einzelschenkelfedern zueinander um die Wickelachse (26) winkelverstellbar sein.

Die Doppelfederzinken (12,13,14,15,16) können nach der Erfindung auch um die Wickelachse (26) winkelverstellbar sein.

## Patentansprüche

1. Heuwerbungsmaschine, insbesondere Kreiselschwader, mit mindestens einem sich auf dem Boden abstützenden, angetriebenen Kreiselrechen (6), mit etwa radial ausgerichteten Zinkenträgern (10), die an ihren Enden mehrere, nebeneinander angeordnete Federzinken mit zum Boden hin gerichteten Schenkelfedern (20,21,22,23) tragen, die einander paarweise zugeordnet sind, die jeweils in einer schraubenlinienförmigen Wicklung (18,19) enden, wobei die Wicklungen (18,19) eine Wickelachse (26) aufweisen, die im wesentlichen parallel zur Achse des Zinkenträgers (10) im Befestigungsbereich der Federzinken ausgerichtet ist, wobei die ersten Schenkelfedern (20) des Schenkelfederpaares zur Halmgutbearbeitung wirksame Teile aufweisen, die eine in Drehrichtung (8) des Kreiselrechens (6) voreilende erste Zinkenreihe bilden, wobei die zweiten Schenkelfedern (21,22,23) des Schenkelfederpaares wirksame Teile aufweisen, die eine zu denen der ersten Schenkelfedern (20) in Drehrichtung (8) des Kreiselrechens (6) abweichende Lage einnehmen und ihrerseits eine in Drehrichtung (8) des Kreiselrechens (6) nacheilende zweite Zinkenreihe bilden, und wobei die Schenkelfedern (20,21,22,23) der Zinkenreihen in Drehrichtung (8) des Kreiselrechens (6) in einem Abstand zueinander gelegen sind, der durch eine Abkröpfung der Schenkelfedern (20,21,22,23) in ihrem oberen Bereich in Drehrichtung (8) bestimmt ist, **dadurch gekennzeichnet**, daß im Verkröpfungsbereich die Schenkelfedern (20,21,22,23) der zweiten Zinkenreihe eine den Abstand zwischen den Schenkelfedern der ersten und der zweiten Zinkenreihe vergrößernde Ausrichtung haben, und der Abstand zwischen den etwa parallel verlaufenden wirksamen Teilen der Schenkelfedern (20,21,22,23) der ersten und der zweiten Zinkenreihe 8 cm übersteigt.

2. Heuwerbungsmaschine nach Anspruch 1, **dadurch gekennzeichnet**, daß die paarweise einander zugeordneten Schenkelfedern (20;21,22,23) Teil eines Doppelfederzinkens (13;14) bilden.

3. Heuwerbungsmaschine nach Anspruch 1 oder 2, **dadurch gekennzeichnet**, daß die wirksamen Teile der einander paarweise zugeordneten Schenkelfedern (20;21,22,23) einen Abstand in radialer Richtung zueinander haben, der kleiner ist als deren Abstand am Übergang in die Wicklungen (18,19).

4. Heuwerbungsmaschine nach einem der Ansprüche 1 bis 3, **dadurch gekennzeichnet**, daß beide Schenkelfedern (20,21;20,22;20,23) verkröpft sind.

5. Heuwerbungsmaschine nach einem der Ansprüche 1 bis 4, **dadurch gekennzeichnet**, daß die in Drehrichtung (8) des Kreiselrechens (6) vorlaufende Schenkelfeder (20) des Schenkelfederpaares radial außenliegend angeordnet ist.

6. Heuwerbungsmaschine nach einem der Ansprüche 1 bis 4, **dadurch gekennzeichnet**, daß die in Drehrichtung (8) des Kreiselrechens (6) vorlaufende Schenkelfeder (20) des Schenkelfederpaares radial innenliegend angeordnet ist.

7. Heuwerbungsmaschine nach einem der Ansprüche 1 bis 6, **dadurch gekennzeichnet**, daß die vorlaufende Schenkelfeder (20) des Schenkelfederpaares tangential aus der Wicklung (19) zum Boden hin gerichtet ist.

8. Heuwerbungsmaschine nach einem der Ansprüche 1 bis 7, **dadurch gekennzeichnet**, daß die zur Halmgutbearbeitung wirksamen Teile der Schenkelfedern (20,21;20,22;20,23) eines Schenkelfederpaares bzw. eines Doppelfederzinkens (13,14) jeweils unterschiedliche Wirkungslinien (31,32) um die Kreiselachse (11) durchlaufen.

9. Heuwerbungsmaschine nach einem der Ansprüche 1 bis 7, **dadurch gekennzeichnet**, daß die zur Halmgutbearbeitung wirksamen Teile der Schenkelfedern (20,21;20,22;20,23) eines Schenkelfederpaares bzw. eines Doppelfederzinkens (12,15) jeweils eine gemeinsame Wirkungslinie (31) um die Kreiselachse (11) durchlaufen.

10. Heuwerbungsmaschine nach einem der Ansprüche 1 bis 9, **dadurch gekennzeichnet**, daß der Abstand (28) der wirksamen Teile der Schenkelfedern (20,21;20,23) eines Schenkelfederpaares bzw. eines Doppelfederzinkens (12,16) in Drehrichtung (8) etwa 20 cm bis 30 cm, vorzugsweise 25 cm, beträgt.

11. Heuwerbungsmaschine nach einem der Ansprüche 1 bis 10, **dadurch gekennzeichnet**, daß mehrere gleiche Schenkelfederpaare bzw. Doppelfederzinken (12) auf jedem Zinkenträger (10) nebeneinander angeordnet sind.

12. Heuwerbungsmaschine nach einem der Ansprüche 1 bis 9, **dadurch gekennzeichnet**, daß mehrere unterschiedliche Schenkelfederpaare bzw. Doppelfederzinken (12,15;13,14) auf jedem Zinkenträger (10) nebeneinander angeordnet sind.

13. Heuwerbungsmaschine nach Anspruch 11, **dadurch gekennzeichnet**, daß auf jedem Zinkenträger (10) mehrere Schenkelfederpaare bzw. Doppelfederzinken (12,15) mit jeweils in Drehrichtung (8) verschiedenen Abständen (28,29) zwischen ihren Schenkelfedern (20,21;20,22) nebeneinander angeordnet sind.

14. Heuwerbungsmaschine nach Anspruch 12, **dadurch gekennzeichnet**, daß bei mehreren nebeneinander angeordneten Schenkelfederpaaren bzw. Doppelfederzinken (12,15) mit unterschiedlichen Abständen (28,29) zwischen ihren Schenkelfedern (20,21;20,22) der kleinere Schenkelfederabstand (29) etwa 8 cm bis 18 cm beträgt.

15. Heuwerbungsmaschine nach einem der Ansprüche 1 bis 14, **dadurch gekennzeichnet**, daß eine gemeinsame vertikale Ebene (33) durch die Enden der Schenkelfedern (20) der ersten Zinkenreihe in Drehrichtung (8) des Kreiselrechens (6) im Abstand (35) vor der vertikalen Kreiselachse (11) des Kreiselrechens (6) verläuft.

16. Heuwerbungsmaschine nach einem der Ansprüche 1 bis 15, **dadurch gekennzeichnet**, daß eine gemeinsame vertikale Ebene (34) duch die Enden der Schenkelfedern (21,23) der zweiten Zinkenreihe die vertikale Kreiselachse (11) des Kreiselrechens (6) schneidet.

17. Heuwerbungsmaschine nach einem der Ansprüche 1 bis 15, **dadurch gekennzeichnet**, daß die Schenkelfedern (21,22,23) der zweiten Zinkenreihe eine größere Höhe (30) aufweisen als die Schenkelfedern (20) der ersten Zinkenreihe.

18. Heuwerbungsmaschine nach einem der Ansprüche 1 bis 17, **dadurch gekennzeichnet**, daß der Verkröpfungsbereich (27) der Schenkelfedern (21,22,23) der zweiten Zinkenreihe deren oberen Drittelbereich einnimmt.

19. Heuwerbungsmaschine nach einem der Ansprüche 1 bis 18, **dadurch gekennzeichnet**, daß im Verkröpfungsbereich (27) die Schenkelfedern (21,22,23) unter einem Winkel von etwa α = 20° bis α = 40°, vorzugsweise α = 35°, zu einer Horizontalebene durch die Wicklungsachse (26) verläuft.

20. Heuwerbungsmaschine nach einem der Ansprüche 1 bis 19, **dadurch gekennzeichnet**, daß ein Schenkelfederpaar aus zwei nicht fest miteinander verbundenen Einzelschenkelfedern gebildet ist.

21. Heuwerbungsmaschine nach Anspruch 20, **dadurch gekennzeichnet**, daß die Einzelschenkelfedern der Schenkelfederpaare zueinander um die Wickelachse (26) winkelverstellbar sind.

22. Heuwerbungsmaschine nach einem der Ansprüche 1 bis 18, **dadurch gekennzeichnet**, daß jeder Doppelfederzinken (12,13,14,15,16) um die Wickelachse (26) winkelverstellbar ist.

## Claims

1. A hay-making machine, particularly a rotary windrower, with, supported on the ground, at least one driven rotary rake (6), having substantially radially orientated tine carriers (10) carrying at their ends a plurality of adjacently disposed spring tines having, directed towards the ground, leg springs (20, 21, 22, 23) associated with one another in pairs and which respectively end in a helical winding (18, 19), the windings (18, 19) having a winding axis (26) directed substantially parallel with the axis of the tine carrier (10) and in the region of spring tine attachment, the first leg springs (20) of the pair of leg springs having parts for dealing with stalk crops and which constitute a first row of tines which lead in the direction (8) of rotation of the rotary rake (6), the second leg springs (21, 22, 23) of the pair of leg springs comprising parts which assume a position divergent from that of the first leg springs (20) in the direction (8) of rotation of the rotary rake (6) and which, for their part, form a trailing second row of tines in the direction (8) of rotation of the rake (6), whereby the leg springs (20; 21, 22, 23) of the rows of tines being spaced apart from one another in the direction (8) of rotation of the rotary rake (6), the spacing being determined by a cranking of the leg springs (20; 21, 22, 23) in their upper region, in the direction (8) of rotation, characterised in that in the region of the cranking, the leg springs (20; 21, 22, 23) of the second row of tines have an orientation which increases the distance between the leg springs of the first and of the second row of tines, the distance between the substantially parallel effective parts of the leg springs (20, 21, 22, 23) of the first and second rows of tines exceeding 8 cm.

2. A hay-making machine according to claim 1, characterised in that the mutually and pairwisely associated leg springs (20; 21, 22, 23) form part of a double spring tine (13; 14).

3. A hay-making machine according to claim 1 or 2, characterised in that the effective parts of the mutually pairwisely associated leg springs (20; 21, 22, 23) are spaced apart radially from one another by an amount which is less than their spacing at the transition into the windings (18, 19).

4. A hay-making machine according to one of claims 1 to 3, characterised in that both leg springs (20, 21; 20, 22; 20, 23) are cranked.

5. A hay-making machine according to one of claims 1 to 4, characterised in that the leg spring (20) of the pair of leg springs leading in the direction (8) of the rotary rake (6) is disposed radially on the outside.

6. A hay-making machine according to one of claims 1 to 4, characterised in that the leg spring (20) of the pair of leg springs leading in the direction (8) of the rotary rake (6) is disposed radially on the inside.

7. A hay-making machine according to one of claims 1 to 6, characterised in that the leading leg spring (20) of the pair of leg springs is directed tangentially out of the winding (19) and towards the ground.

8. A hay-making machine according to one of claims 1 to 7, characterised in that the parts of the leg springs (20, 21; 20, 22; 20, 23) of a pair of leg springs or of a double spring tine (13, 14) which are for handling stalk goods pass through respective different lines (31, 32) of action about the axis of rotation (11).

9. A hay-making machine according to one of claims 1 to 7, characterised in that the parts of the leg springs (20, 21; 20, 22; 20, 23) of a pair of leg springs or a double spring tine (12, 15) which are for handling stalk goods pass through in each case a common line (31) of action about the axis of rotation (11).

10. A hay-making machine according to one of claims 1 to 9, characterised in that the spacing (28) between the effective parts of the leg springs (20, 21; 20, 23;) of a pair of leg springs or of a double spring tine (12, 16) amounts to about 20 cm to 30 cm and preferably 25 cm in the direction of rotation (8).

11. A hay-making machine according to one of claims 1 to 10, characterised in that a plurality of identical pairs of leg springs or double spring tines (12) are disposed beside one another on each tine carrier (10).

12. A hay-making machine according to one of claims 1 to 9, characterised in that the plurality of different pairs of leg springs or double spring tines (12, 15; 13, 14) are disposed beside one another on each tine carrier (10).

13. A hay-making machine according to claim 11, characterised in that a plurality of pairs of leg springs or double spring tines (12, 15) are disposed beside one another on each tine carrier (10) and in that there are different gaps (28, 29) between their leg springs (20, 21; 20, 22) in the direction of rotation (8).

14. A hay-making machine according to claim 12, characterised in that when there are a plurality of adjacently disposed pairs of leg springs or double spring tines (12, 15) with different spacings (28, 29) between their leg springs (20, 21; 20, 22) the smaller leg spring gap (29) is approximately 98 cm to 18 cm.

15. A hay-making machine according to one of claims 1 to 14, characterised in that a common vertical plane (33) extends through the ends of the leg springs (20) of the first row of tines in the direction (8) of rotation of the rotary rake (6) at the distance (13) in front of the vertical axis (11) of rotation of the rotary rake (6).

16. A hay-making machine according to one of claims 1 to 15, characterised in that a common vertical plane (34) through the ends of the leg springs (21, 23) of the second row of tines intersects the vertical axis (11) of rotation of the rotary rake (6).

17. A hay-making machine according to one of claims 1 to 15, characterised in that the leg springs (21, 22, 23) of the second row of tines have a greater height (30) than the leg springs (20) of the first row of tines.

18. A hay-making machine according to one of claims 1 to 17, characterised in that the regions (27) in which the leg springs (21, 22, 23) of the second row of tines are cranked occupies the upper third thereof.

19. A hay-making machine according to one of claims 1 to 18, characterised in that in the cranked region (27) the leg springs (21, 22, 23) extend at an angle of about α = 20° to α = 40° and preferably α = 35°, to a horizontal plane through the winding axis (26).

20. A hay-making machine according to one of claims 1 to 19, characterised in that a pair of leg springs is constituted by two individual leg springs which are not rigidly connected to each other.

21. A hay-making machine according to claim 20, characterised in that the single leg springs of the pairs of leg springs can be angularly adjusted in respect of one another about the winding axis (26).

22. A hay-making machine according to one of claims 1 to 18, characterised in that each double spring tine (12, 13, 14, 15, 16) is angularly adjustable about the winding axis (26).

## Revendications

1. Machine de fenaison, notamment andaineuse à rotor comportant,
• au moins un râteau rotatif (6) entraîné, s'appuyant sur le sol, ayant des supports de dents (10) alignés sensiblement dans la direction radiale, dont les extrémités portent plusieurs dents élastiques juxtaposées, ayant des branches de ressort (20, 21, 22, 23) dirigées vers le sol et qui sont associées par paires, se terminant chaque fois par un enroulement hélicoïdal (18, 19),
• les enroulements (18, 19) ayant un axe d'enroulement (26) essentiellement parallèle à l'axe du support de dents (10) dans la zone de fixation des dents de ressort,
• les premières branches de ressort (20) des paires de branches de ressort ayant des parties actives pour la préparation des produits en tige, ces parties formant une première rangée de dents en amont dans le sens de rotation (8) du râteau rotatif (6),
• les secondes branches de ressort (21, 22, 23) des paires de branches de ressort ayant des parties actives qui sont dans une position s'écartant des premières branches de ressort (20) dans le sens de rotation (8) du râteau rotatif (6), et formant à leur tour une seconde rangée de dents en aval dans le sens de rotation (8) du râteau rotatif (6), et
• les branches de ressort (20, 21, 22, 23) des rangées de dents étant écartées d'une distance dans la direction de rotation (8) du râteau rotatif (6) qui est définie par un cintrage des branches de ressort (20, 21, 22, 23) dans leur zone supérieure, dans le sens de rotation (8),
caractérisée en ce que
• dans la zone cintrée, les branches de ressort (20, 21, 22, 23) de la seconde rangée de dents ont une distance entre les branches de ressort de la première et de la seconde rangées de dents avec un alignement croissant et,
• la distance entre les parties actives des branches de ressort (20, 21, 22, 23) qui sont sensiblement parallèles des premières et secondes rangées de dents dépasse 8 cm.

2. Machine de fenaison selon la revendication 1,
caractérisée en ce que
les branches de ressort (20 ; 21, 22, 23) associées par paires font partie d'une dent à double ressort (13 ; 14).

3. Machine de fenaison selon la revendication 1 ou 2,
caractérisée en ce que
les parties actives des branches de ressort (20 ; 21, 22, 23) associées par paires ont entre elles une distance dans la direction radiale qui est inférieure à leur distance à l'endroit où elles rejoignent les enroulements (18, 19).

4. Machine de fenaison selon l'une quelconque des revendications 1 à 3,
caractérisée en ce que
les deux branches de ressort (20, 21 ; 20, 22 ; 20, 23) sont cintrées.

5. Machine de fenaison selon l'une quelconque des revendications 1 à 4,
caractérisée en ce que
la branche de ressort (20) de la paire de branches de ressort, en amont dans le sens de rotation (8) du râteau rotatif (6) est radialement à l'extérieur.

6. Machine de fenaison selon l'une quelconque des revendications 1 à 4,
caractérisée en ce que
la branche de ressort (20) de la paire de branches de ressort en amont dans le sens de rotation (8) du râteau rotatif (6) est radialement vers l'intérieur.

7. Machine de fenaison selon l'une quelconque des revendications 1 à 6,
caractérisée en ce que
la branche de ressort (20) en amont de la paire de branches de ressort est orientée vers le sol tangentiellement à l'enroulement (19).

8. Machine de fenaison selon l'une quelconque des revendications 1 à 7,
caractérisée en ce que
les parties de branches de ressort (20, 21 ; 20, 22 ; 20, 23) actives pour le traitement des produits en tige et appartenant à une paire de branches de ressort ou à une dent à double ressort (13, 14) parcourent des lignes d'action différentes (31, 32) autour de l'axe (11) du râteau rotatif.

9. Machine de fenaison selon l'une quelconque des revendications 1 à 7,
caractérisée en ce que
les parties des branches de ressort (20, 21 ; 20, 22 ; 20, 23) actives pour la préparation des produits en tige d'une paire de branches de ressort ou d'une double dent à ressort (12, 15) parcourent chaque fois une ligne d'action commune (31) autour de l'axe (11) du râteau rotatif.

10. Machine de fenaison selon l'une quelconque des revendications 1 à 9,
caractérisée en ce que
la distance (28) des parties actives des branches de ressort (20, 21 ; 20, 23) d'une paire de branches de ressort ou d'une dent à double ressort (12, 16) prise dans le sens de rotation (8) est d'environ 20 cm jusqu'à 30 cm, et de préférence 25 cm.

11. Machine de fenaison selon l'une quelconque des revendications 1 à 10,
caractérisée en ce que
plusieurs paires de branches de ressort ou de dents à double ressort (12) identiques sont juxtaposées sur chaque support de dent (10).

12. Machine de fenaison selon l'une quelconque des revendications 1 à 9,
caractérisée en ce que
plusieurs paires de branches de ressort ou de dents à double ressort (12, 15 ; 13, 14), différentes sont juxtaposées sur chaque support de dent (10).

13. Machine de fenaison selon la revendication 11,
caractérisée en ce que
plusieurs paires de branches de ressort ou de dents à double ressort (12, 15) sont juxtaposées sur chaque support de dent (10) avec chaque fois des distances différentes (28, 29) dans le sens de rotation (8), entre leurs branches de ressort (20, 21 ; 20, 22).

14. Machine de fenaison selon la revendication 12,
caractérisée en ce que
pour plusieurs paires de branches de ressort ou dents à double ressort (12, 15), juxtaposées, pour des distances différentes (28, 29) entre leurs branches de ressort (20, 21 ; 20, 22), la plus petite distance des branches (29) est de l'ordre de 8 cm à 18 cm.

15. Machine de fenaison selon l'une quelconque des revendications 1 à 14,
caractérisée en ce qu'
un plan vertical commun (33) passe par les extrémités des branches de ressort (20) de la première rangée de dents, dans le sens de rotation (8) du râteau rotatif (6), à une distance (35) en amont de l'axe de rotation vertical (11) du râteau rotatif (6).

16. Machine de fenaison selon l'une quelconque des revendications 1 à 15,
caractérisée en ce qu'
un plan vertical commun (34) passant par l'extrémité des branches de ressort (21, 23) de la seconde rangée de dents, coupe l'axe vertical (11) du râteau rotatif (6).

17. Machine de fenaison selon l'une quelconque des revendications 1 à 15,
caractérisée en ce que
les branches de ressort (21, 22, 23) de la seconde rangée de dents ont une hauteur (30) plus grande que les branches de ressort (20) de la première rangée de dents.

18. Machine de fenaison selon l'une quelconque des revendications 1 à 17,
caractérisée en ce que
la zone cintrée (27) des branches de ressort (21, 22, 23) de la seconde rangée de dents occupe le tiers supérieur.

19. Machine de fenaison selon l'une des revendications 1 à 18,
caractérisée en ce que
dans la zone de cintrage (27), les branches de ressort (21, 22, 23) font entre elles un angle de l'ordre de α = 20° jusqu'à α = 40° et de préférence α = 35° par rapport à un plan horizontal passant par l'axe d'enroulement (26).

20. Machine de fenaison selon l'une quelconque des revendications 1 à 19,
caractérisée en ce qu'
une paire de branches de ressort est formée de deux branches de ressort séparées, non solidaires.

21. Machine de fenaison selon la revendication 20,
caractérisée en ce que
les branches de ressort séparées de la paire de branches de ressort sont réglables angulairement autour de l'axe d'enroulement (26).

22. Machine de fenaison selon l'une quelconque des revendications 1 à 18,
caractérisée en ce que
chaque dent à double ressort (12, 13, 14, 15, 16) peut être réglée angulairement autour de l'axe d'enroulement (26).
